# EUROPÄISCHE PATENTSCHRIFT

(11) **EP 0 957 131 B1**
(45) Veröffentlichungstag und Bekanntmachung des Hinweises auf die Patenterteilung: **02.07.2003**
(21) Anmeldenummer: 99108225.6
(22) Anmeldetag: 27.04.1999
(51) Int. Cl.: C08L 77/00, C08L 77/06, C08L 77/02

(54) **Präpolymere Polyamide enthaltende Polyamidformmassen und Verfahren zu deren Herstellung sowie deren Verwendung**
Polyamide moulding composition containing polyamide prepolymer, process for their preparation and their use
Composition de polyamide contenant un prépolymère de polyamide, son procédé de préparation et son utilisation

(30) Priorität: 14.05.1998 DE 19821719
(43) Veröffentlichungstag der Anmeldung: 17.11.1999
(73) Patentinhaber: EMS-Chemie AG, 7013 Domat/Ems (CH)
(72) Erfinder: Nay, Renato, Dipl. Chem. HTL, 7425 Masein (CH); Hewel, Manfred, Dr.rer.nat., 7415 Rodels (CH)
(74) Vertreter: Pfenning, Meinig & Partner

(56) Entgegenhaltungen:
- EP-A- 0 272 695
- EP-A- 0 553 617
- US-A- 4 661 585
- DATABASE WPI Week 199543 Derwent Publications Ltd., London, GB; Page 007, AN 1995-332606 XP002181656 & JP 07 228694 A (OKA HIDEAKI), 29. August 1995 (1995-08-29)
- DATABASE WPI Week 198638 Derwent Publications Ltd., London, GB; Page 006, AN 1986-249855 XP002181657 & JP 61 179258 A (MURABAYASHI KATSUYOSHI), 11. August 1986 (1986-08-11)

## Beschreibung

Die Erfindung betrifft Polyamidformmassen und ein Verfahren zu deren Herstellung mit stark verbesserter Verarbeitbarkeit, Fließwegen und Oberflächenqualität, ohne Verlust von Festigkeit oder Wärmestabilität, ein Verfahren zu ihrer Herstellung und ihre Verwendung zur Herstellung von Formkörpern wie Fasern, Folien, Rohren, Hohlkörpern oder anderen Halbzeugen oder Fertigteilen z.B. durch Extrusion, Pultrusion, Spritzguß, Spritzblasen oder anderen Verformungstechniken.

Die Erfindung ist dadurch gekennzeichnet, daß in die Polyamidformmassen Mengen bis 20 Gew.-% der Polyamidmatrix von Präpolymeren gleichen oder verschiedener Polyamide eingearbeitet werden, wodurch eine starke Verbesserung der Fließfähigkeit und des Entformungsverhaltens, sowie der Oberflächenqualität erreicht wird, ohne daß Festigkeit und Wärmestabilität vermindert wird. Die erfindungsgemäßen Polyamidformmassen betreffen hauptsächlich solche, welche mit Verstärkungsmitteln aller Art oder bestimmten Additiven ausgerüstet sind, aber auch Formmassen, welche keinerlei Zusätze enthalten. Die Erfindung betrifft weiterhin die Verwendung der Formmasse.

Zusätzliche Additive für die Verbesserung der Verarbeitbarkeit von Polyamidformmassen für die Extrusion oder den Spritzguß sind bekannt. So werden Amide bzw. Harnstoffderivate als Zusatz zur Verbesserung der Fließeigenschaften sowie bestimmte Amide, Diamide oder Imide vorgeschlagen.

Zu diesem Zwecke ist auch der Zusatz von Siliconölen, Stearinsäure oder deren Calcium oder Zinksalzen oder von langkettigen aliphatischen Estern und Alkoholen beschrieben.

Diese Zusätze haben aber oft den Nachteil, daß sie die Qualität der Polyamidformmassen verschlechtern, indem sie zum Ausschwitzen d.h. zur Migration oder auch zur Rauchbildung bei der Verarbeitung neigen oder durch Lösungsmittel heraus extrahiert werden oder Schlieren und Flecken bilden oder einen Molekulargewichtsabbau bewirken und damit Festigkeit, Steifheit und wärmeformbeständigkeit erniedrigen (Nylon Plastics Handbook, Melvin I. Kohan, Seiten 436-440).

Auch ist es bekannt zur Verbesserung des Oberflächenglanzes verschiedene Zusätze einzuarbeiten. Hierbei ist die Verwendung von Polyhexamethylenadipinsäureamid oder Polyhexamethylenisophthalsäureamid der Viskosität 1,5-2,8 (1 % in Schwefelsäure) in Kombination mit Kupfer-, Jod- oder Mangansalzen oder den Zusatz von Polyphenyläther zu nennen. Andererseits wurden auch Harzmaterialien aus Polyamiden mit gutem Oberflächenglanz bei weitgehend erhöhtem Anteil an anorganischen Füllstoffen entwickelt. Zur Erhöhung von Festigkeit und Steifheit wird die Verwendung von Terephthalsäure und Isophthalsäure in Polyamidharzen vorgeschlagen. Allerdings ist es schwierig daraus Formkörper mit zufriedenstellender Oberflächenqualität herzustellen, weil diese eine schlechte Fließfähigkeit aufweisen.

Ebenfalls ist die Verbesserung der Wärmestabilität von Formmassen bekannt. In DE 4 311 885 werden zu diesem Zwecke Zusätze von Alkalisalzen der Oxal-, Malon-, Glutar- oder Phthalsäure empfohlen.

Hierbei ist es aber notwendig zur gleichzeitigen Verbesserung von mehreren wichtigen Eigenschaften der Polyamidformmassen, wie Fließverhalten, Glanz, Festigkeit und Wärmestabilität verschiedenartige Zusätze zu verwenden. Diese Zusatzstoffe sind aber einerseits nicht immer miteinander verträglich, andererseits beeinträchtigen sie oft wichtige weitere Eigenschaften wie die Zähigkeit, die Flexibilität, die Reißdehnung oder die Spannungsrißbeständigkeit.

In EP 0 272 695 werden schlagzähe, mehrphasige, thermoplastische Polyamidmischungen beschrieben, welche mit 10-40 Gew.-% Schlagzähmodifikatoren vom Typ EP, EPDM, SEBS, SBS, SAN und ähnlichen ausgerüstet sind und neben dem hochmolekularen Polyamid auch einen Anteil von tiefer molekularen Polyamideinheiten zur Verbesserung der Verarbeitung enthalten. Das tiefer molekulare Polyamid hat die Aufgabe die durch die Schlagzähmodifizierung entstandene höhere Viskosität wieder zu erniedrigen und damit die Formmassen verarbeitbarer zu machen; es besitzt einen hohen unausgeglichenen Endgruppengehalt, ein mittleres Molekulargewicht von < 5000 und eine inherente Viskosität von < 0,5 dl/g, so daß die Polyamidmischung schließlich eine resultierende Viskosität von 5-50 Pa.s (50-500 Poise) bzw. einen Schmelzfluß von 100-> 200 g/10 Minuten bei 280 °C und 2160 g Last gemäß ASTM D 1238 erreicht.

Das beschriebene Verfahren ist aufwendig, da es zwei Extrusionsschritte benötigt und insofern unbefriedigend, als die hergestellten Polyamidformkörper besonders bei höheren Konzentrationen der fremdpolymeren Schlagzähmodifikatoren oft fleckig entstehen und bei größeren Formteilen Schlieren aufweisen, außerdem das niedermolekulare Polyamid sich mit dem hochmolkularen Polyamid durch teilweise Nachkondensation und Umamidierung ungleichmäßig reagiert, wodurch starke Schwankungen in der Viskosität auftreten können.

Die EP 0 553 617 offenbart Polyamidformmassen mit einem hohen Gehalt an Füllstoffen, bei dem die Füllstoffe mit einem niedermolekularen Polyamid der Viskositätszahl 40-80 ml/g (gemessen bei 25 °C in 0,5 %iger H₂SO₄ 96 %ig) in der Schmelze gemischt werden und durch einen separaten Nachkondensationsschritt in fester Phase auf höhere Viskositäten gebracht werden. Das niedermolekularere Polyamid soll einen möglichst äquimolaren, nicht zu hohen Endgruppengehalt aufweisen. Dieses Verfahren hat den Nachteil, daß zwei Arbeitsstufen erforderlich sind und daß mit starken Schwankungen der Endviskosität gerechnet werden muß, wodurch Formteile oft rauh, fleckig und mit Schlieren behaftet entstehen und daß die Nachkondensation zeitaufwendig ist und zu mangelhafter Verarbeitbarkeit der Formmassen Anlaß gibt.

Es war nun Aufgabe der vorliegenden Erfindung, gefüllte und ungefüllte Polyamidformmassen für Formteile zur Verfügung zu stellen, welche eine besonders gute Oberflächenqualität, einen hohen Oberflächenglanz und sehr gute Fließeigenschaften ermöglichen. Außerdem sollten die erfindungsgemäßen Poylamidformmassen, wichtige Eigenschaften der Fertigteile nicht verschlechtern, sondern verbessern, wie die Festigkeit, die Steifheit und wärmeformbeständigkeit, ferner daß auch höhere Füllstoffmengen als üblich eingearbeitet werden können. Eine weitere Aufgabe der Erfindung ist es ein entsprechendes Verfahren zur Herstellung solcher Formmassen anzugeben sowie deren Verwendung.

Die Aufgabe wird in bezug auf die Polyamidformmassen durch die kennzeichnenden Merkmale des Anspruches 1, in bezug auf das Herstellungsverfahren durch die Merkmale des Anspruches 9 und bezüglich der Verwendung durch die Merkmale des Anspruches 11 gelöst. Die Unteransprüche zeigen vorteilhafte Weiterbildungen auf.

Der Gegenstand der vorliegenden Erfindung besteht somit darin, daß in die Polyamidformmassen zusätzliche Anteile von präpolymeren Polyamiden definierter Viskosität eingearbeitet sind.

Die erfindungsgemäßen Polyamidformmassen können aus einem oder mehreren Polyamiden bestehen und auch die zugesetzten präpolymeren Polyamiden können vom gleichen Typ wie die Polyamidmatrix der Formmassen sein oder sich von verschiedenen Polyamidtypen ableiten.

Erfindungsgemäß erstrecken sich die Formmassen, welche die präpolymeren Polyamide enthalten, auf alle Polyamide, kristalline wie amorphe oder Mischungen derselben. Ein Überblick über Polyamide ist z.B. aus Römpp Chemie-Lexikon, 9. Auflage, Band 5, S. 359 ff und den darin genannten Literaturzitaten zu entnehmen. Bevorzugt sind aber die Polyamide PA 6, PA 66, PA 11, PA 12, PA 6T/66, PA 6T/6I, PA 6I/6T, PA 6/6T, PA 6/66, PA 8T, PA 9T, PA 12T, PA 69, PA 610, PA 612, PA 1012, PA 1212, PA MACM 12, PA PACM12, PA MACMT, PA PACP12, PA NDT, PA MXDI, PA NI, PA NT, PA TMHMDAT,T, PA 12/PACMT/PACMI, PA 12/MACMI/MACMT, PA N12, PA 6/MACMI. Entsprechendes gilt für die in den Polyamiden eingesetzten Präpolymere. Die Erfindung erstreckt sich somit auch für die Präpolymere auf alle vorstehend genannten Polyamide.

Die Viskosität der zugesetzten präpolymeren Polyamide liegt bei 1,01-1,3 gemessen in 0,5 %m-Kresol, bevorzugt bei 1,05-1,25. Die Formmassen enthalten dabei 0,1-20 Gew.-% Präpolymere bezogen auf der Polymermatrix besonders bevorzugt 2-18 Gew.-%. Die beste Ergebnisse werden mit 2-16 % erzielt.

Die Polyamidformmassen enthalten bevorzugt Füllstoffe in Mengen von 1-95 Gew.-% wie Glasfasern, Glaskugeln, Glaspulver, Polymer Fasern, C-Fasern, Metallfasern, Mineralstoffe wie Talkum, Kalk, Kaolin, Silikate, Antiflammittel wie Hydroxide, Phosphate, halogenhaltige Stoffe, Dekoriermittel, Stabilisatoren, Katalysatoren, weiter Additive wie Kristallisationsmittel, Gleitmittel, Antioxidantien u.a.m. können aber auch als reine Polyamide ohne Zusätze vorliegen.

Die Erfindung betrifft weiterhin ein Verfahren zur Herstellung der vorstehend beschriebenen Polyamidformmassen. Zur Herstellung der erfindungsgemäßen Polyamidformmassen werden dazu die präpolymeren Polyamide definierter Viskosität in die Polyamide eingearbeitet. Dies kann dadurch geschehen, daß die Präpolymere trocken beigemischt und dann in der Schmelze verarbeitet werden oder im Zuge der Kompoundierung der Formmassen in Knet- oder Schneckenmaschinen zudosiert werden oder bei der Spritzgußverarbeitung aufgepudert bzw. angerollt werden. Die präpolymeren Polyamidanteile werden als Pulver oder hartes körniges Gut oder pastenartiges Produkt evtl. im Gemisch mit hochmolekularem Polyamid und in Mengen von 0,1-20 Gew.-% bezogen auf die Polyamidmatrix, bevorzugt in Mengen von 2-18 Gew.-%, weiter bevorzugt von 2-16 Gew.-% zugesetzt. Die Verarbeitungstemperatur beträgt 160-380 °C, bevorzugt 180-350 °C. Geeignete Maschinen zur Einarbeitung der präpolymeren Polyamidanteile in die Polyamidformmassen sind Einund Zweiwellenextruder Knetmaschinen, Spritzgußmaschinen und ähnliche.

Die den hochmolekularen Polyamidformmassen zugesetzten präpolymeren Polyamidanteile verursachen einerseits eine deutliche Viskositätsabnahme von 100 % und mehr je nach Menge des zugesetzten präpolymeren Polyamides, so daß der MVI Ausgangswert der Formmassen von ca. 10-100 ml/10 Min. um ein mehrfaches zunehmen kann, abhängig auch von der Art des Polyamides. Dadurch werden höhere Füllstoffmengen von bis zu 95 Gew.-% möglich, weil diese durch die präpolymeren Polyamide besser benetzt und so in die Polyamid Matrix besser eingebunden werden können.

Andererseits wird durch dieses Verfahren auch der Fließweg der Polyamidformmassen außerordentlich vergrößert, z.T. um ein mehrfaches des Ausgangswertes, so daß viel feinere und dünnere aber auch großflächigere Formteile hergestellt werden können.

Ebenfalls wird die Oberflächenqualität von Fertigteilen stark verbessert, welche durch Füllstoffe oft rauh und fleckig erscheint oder Einbuchtungen und Unebenheiten aufweist. Die Zugabe der präpolymeren Polyamidanteile bewirkt eine glattere und gleichmäßigere Oberfläche der Formteile und verleiht diesen einen hohen Glanz.

Ein weiterer Vorteil besteht darin, daß die präpolymeren Zusätze nicht wie oft weichmachende Fremdstoffe oder Gleitmittel migrieren und Beläge an der Oberfläche bilden oder die mechanischen Eigenschaften bzw. die Wärmeformbeständigkeit erniedrigen, sondern diese aufgrund der verwandten Polymerstruktur stützen, in manchen Fällen sogar verbessern.

Letztlich betrifft die Erfindung auch die Verwendung der Polyamidformmassen wie vorstehend beschrieben. Die erfindungsgemäßen Formmassen werden insbesonders zur Herstellung von Formkörpern wie Fasern, Folien, Rohren, Hohlkörpern oder andere Halbzeugen oder Fertigteilen z.B. durch Extrusion, Pultrusion, Spritzguß, Spritzblasen oder anderen Verformungstechniken eingesetzt. Bevorzugt werden die Formmassen zur Herstellung von gefüllten Formteilen verwendet.

Die nachfolgenden Beispiele verdeutlichen die erfindungsgemäßen Polyamidformmassen:

Die ηrel Werte wurden nach DIN 53727, die MVI (Melt Volume Index) nach ISO 1133 (DIN 53735) und die Glanzwerte mit einem Minolta Multigloss 268 Gerät nach ISO 2813 (DIN 67530) gemessen und die Fließlänge mittels Spinaltest (Fließwegspirale 1,5 x 10) nach werkinterner EMS-Chemie AG Norm ermittelt.

### Erläuterungen zu den Beispielen

Die Einarbeitung der Polyamid-Präpolymere in die Polyamide erfolgte, gemeinsam mit Glasfasern, auf einem Doppelwellenextruder ZSK 25 der Firma Werner & Pfleiderer unter den für Polyamid üblichen Bedingungen. Der abgezogene Strang wird gekühlt, granuliert und getrocknet. Anschließend wird das Granulat auf einer Spritzgießmaschine A270 der Firma Arburg zu Prüfkörpern zur Bestimmung der nachfolgenden mechanischen Eigenschaften und des Fließweges verarbeitet. Der Fließweg wurde an einer Spirale 1,5*10mm bei 1000 bar Druck und für die jeweiligen Polyamide üblichen Verarbeitungstemperaturen und Formtemperaturen bestimmt.

| Begriffserklärungen für nachfolgende Tabellen | |
|---|---|
| PA 66 + PA 6I/6T = | Blend aus Polyamid 66 und einem Copolyamid 6I/6T |
| Glasfasern = | schnittglas der Firma Vetrotex (Typ P355) |
| Präpolymer PA 6T/6I = | Polyamid 6T/6I η-rel. 1,14 gemessen 0,5 % in m-Kresol |
| PA 66 = | Polyamid 66 |
| PA 12 = | Polyamid 12 |
| Präpolymer PA 12 = | Polyamid 12 η-rel. 1,10 gemessen 0,5 % in m-Kresol |
| PA MACM 12 = | Transparentes Polyamid MACM 12 |
| o.B. = | ohne Bruch |

**Tabelle 1**

| (Beispiele 1-4) | |
|---|---|
| Beispiel 1 = | Vergleichsbeispiel ohne präpolymeren Zusatz |
| Beispiel 2-4 = | Beispiele mit präpolymerem Zusatz von 2-8 Gew.-% bezogen auf die gesamte Mischung und 4-16 Gew.-% bezogen auf das Polyamidblend. |

**Tabelle 2**

| (Beispiele 5-6) | |
|---|---|
| Beispiel 5 = | Vergleichsbeispiel ohne präpolymeren Zusatz |
| Beispiel 6-7 = | Beispiele mit präpolymerem Zusatz von 2-4 Gew.-% bezogen auf die gesamte Mischung und 4-8 Gew.-% bezogen auf das Polyamid. |

**Tabelle 3**

| (Beispiele 8-10 | |
|---|---|
| Beispiel 8 = | Vergleichsbeispiel ohne präpolymeren Zusatz |
| Beispiel 9-10 = | Beispiele mit präpolymerem Zusatz von 2-4 Gew.-% bezogen auf die gesamte Mischung und 4-8 Gew.-% bezogen auf das Polyamid. |

**Tabelle 4**

| (Beispiele 11-14) | |
|---|---|
| Beispiel 11, 13 = | Vergleichsbeispiel ohne präpolymeren Zusatz |
| Beispiel 12, 14 = | Beispiele mit präpolymerem Zusatz von 2-4 Gew.-% bezogen auf das Polyamid. |

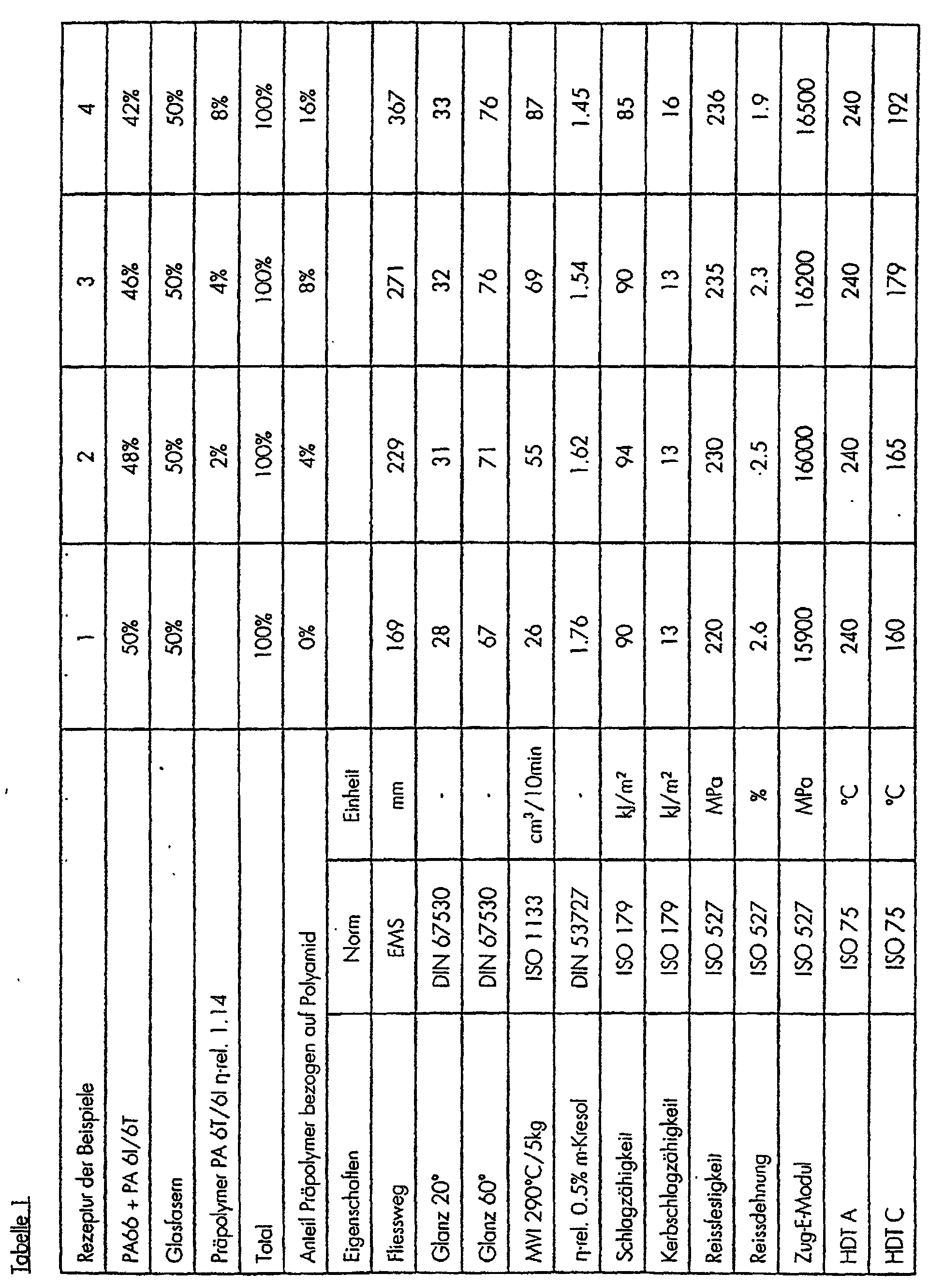

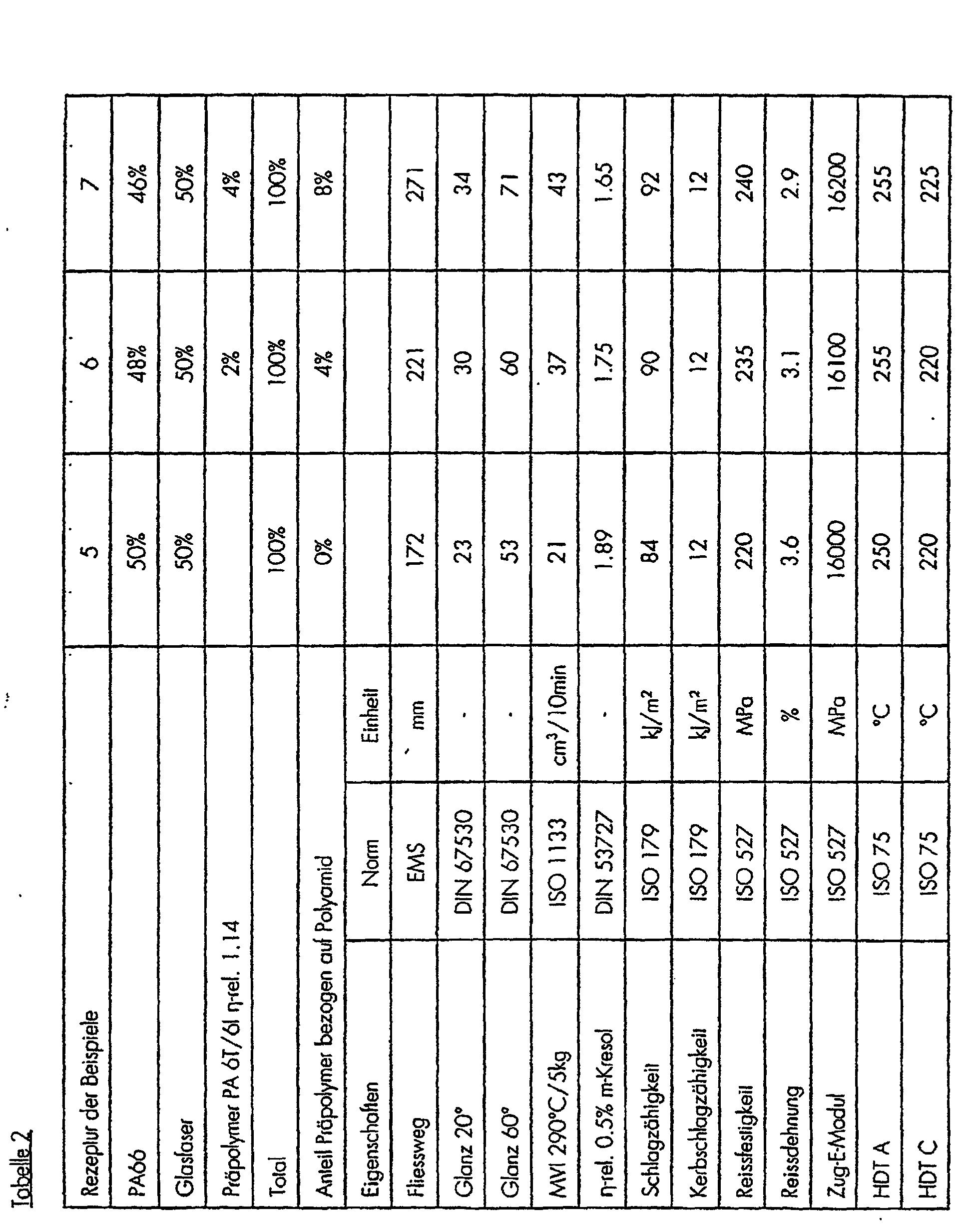

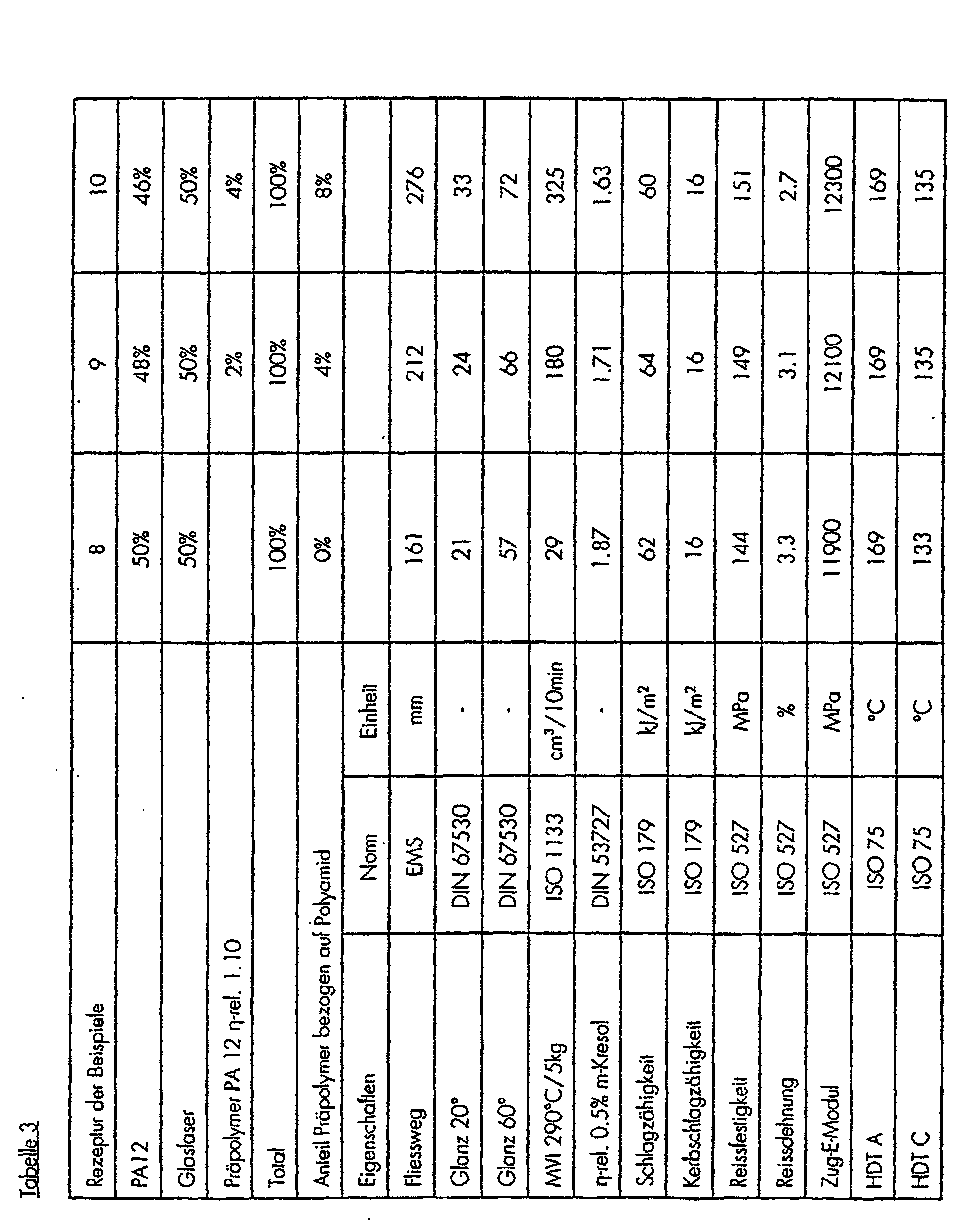

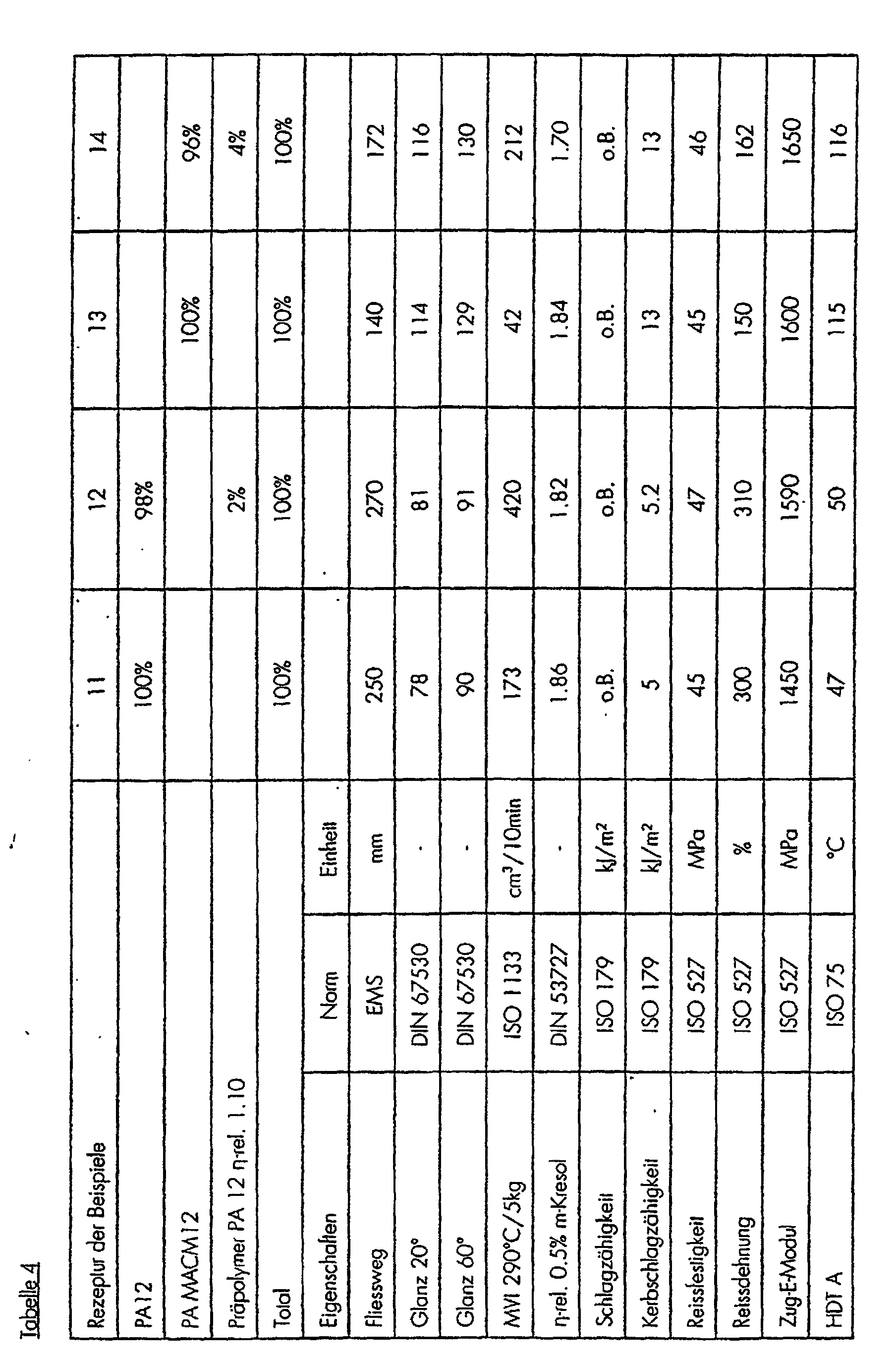

## Patentansprüche

1. Polyamidformmassen mit guter Oberflächenqualität und gutem Fließverhalten, bestehend aus hochmolekularem Polyamid, präpolymeren Polyamiden der Lösungsviskosität ηᵣₑₗ 1,01-1,30, gemessen in 0,5 % m-Kresol nach DIN 53727, in Mengen von 0,1 bis 20 Gew.-%, 1-95 Gew.-% Füllstoffen sowie weiteren Zusätzen, aber keinen Schlagzähmodifikatoren.

2. Polyamidformmassen nach Anspruch 1, **dadurch gekennzeichnet, daß** die präpolymeren Polyamide gleicher Art wie die Polyamidformmassen sind.

3. Polyamidformmassen nach Anspruch 1, **dadurch gekennzeichnet, daß** die präpolymeren Polyamide verschieden von der Art der Polyamidformmassen sind.

4. Polyamidformmassen nach einem der Ansprüche 1 bis 3, **dadurch gekennzeichnet, daß** die Füllstoffe anorganische, metallische oder polymere Fasern, Kugeln, Plättchen, Pulver oder deren Gemische sind.

5. Polyamidformmassen nach einem der Ansprüche 1 bis 4, **dadurch gekennzeichnet, daß** die präpolymeren Polyamide ausgewählt sind aus PA 6, PA 66, PA 6I/6T, PA 6T/6I, PA 6T/66, PA 6/6T, PA 6T/6I/66, PA 6I/66, PA MACMT/6I oder Gemischen davon.

6. Polyamidformmassen nach einem der Ansprüche 1 bis 4, **dadurch gekennzeichnet, daß** die präpolymeren Polyamide ausgewählt sind aus PA 12, PA 612, PA 912, PA 1012, PA 1212, PA 610, PA 12/6T, PA 8T, PA 9T, PA 12T, PA N12, PA NI/6T oder Gemischen davon.

7. Polyamidformmassen nach einem der Ansprüche 1 bis 4, **dadurch gekennzeichnet, daß** die präpolymeren Polyamide ausgewählt sind aus PA MACM I, PA MACM10, PA MACM12, PA PACM12, PA PACP12, PA MXD6, PA MXDI, PA MACMT, PA 12/MACMI, PA 12/MACMT, PA 12/MACMI, PA NDT, PA NDI, PA IPDI/IPDT, PA TMHMDA,T und PA 12/PACM,T/PACM, I oder Gemischen davon.

8. Polyamidformmassen nach einem der Ansprüche 1 bis 7, **dadurch gekennzeichnet, daß** diese weitere Zusätze wie Kettenregler, Stabilisatoren, Kristallisationsmittel, Weichmacher, Farben, Pigmente oder Antioxidantien enthalten, aber keine Flammschutzmittel.

9. Verfahren zur Herstellung von Polyamidformmassen nach mindestens einem der Ansprüche 1 bis 8, **dadurch gekennzeichnet, daß** den Polyamidformmassen in der Schmelze oder durch Kompoundierung präpolymere Polyamide definierte Viskositäten von 0,1 bis zu 20 Gew.-% der Polyamidmatrix zugemischt werden.

10. Verfahren nach Anspruch 9, **dadurch gekennzeichnet, daß** die Formmassen nicht einer separaten Stufe der Nachkondensation unterworfen werden.

11. Verwendung der Polyamidformmassen nach mindestens einem der Ansprüche 1 bis 8, zur Herstellung von Formteilen wie Fasern, Folien, Rohren oder Hohlkörpern .

12. Verwendung nach Anspruch 11, zur Herstellung von gefüllten Formteilen.

## Claims

1. Polyamide moulding compositions having good surface quality and good flow behaviour, comprising high-molecular polyamide, polyamide prepolymers with a solution viscosity ηᵣₑₗ of 1.01-1.30, measured in 0.5% m-cresol according to DIN 53727, in amounts of 0.1 to 20 wt.%, 1-95 wt.% of fillers and other additives, but no impact strength modifiers.

2. Polyamide moulding compositions according to claim 1, **characterised in that** the polyamide prepolymers are of the same type as the polyamide moulding compositions.

3. Polyamide moulding compositions according to claim 1, **characterised in that** the polyamide prepolymers are of a different type from the polyamide moulding compositions.

4. Polyamide moulding compositions according to any one of claims 1 to 3, **characterised in that** the fillers are inorganic, metal or polymer fibres, beads, lamellae, powders or mixtures thereof.

5. Polyamide moulding compositions according to any one of claims 1 to 4, **characterised in that** the polyamide prepolymers are selected from PA 6, PA 66, PA 6I/6T, PA 6T/6I, PA 6T/66, PA 6/6T, PA 6T/6I/66, PA 6I/66, PA MACMT/6I or mixtures thereof.

6. Polyamide moulding compositions according to any one of claims 1 to 4, **characterised in that** the polyamide prepolymers are selected from PA 12, PA 612, PA 912, PA 1012, PA 1212, PA 610, PA 12/6T, PA 8T, PA 9T, PA 12T, PA N12, PA NI/6T or mixtures thereof.

7. Polyamide moulding compositions according to any one of claims 1 to 4, **characterised in that** the polyamide prepolymers are selected from PA MACM I, PA MACM10, PA MACM12, PA PACM12, PA PACP12, PA MXD6, PA MXDI, PA MACMT, PA 12/MACMI, PA 12/MACMT, PA 12/MACMI, PA NDT, PA NDI, PA IPDI/IPDT, PA TMHMDA, T and PA 12/PACM, T/PACM, I or mixtures thereof.

8. Polyamide moulding compositions according to any one of claims 1 to 7, **characterised in that** they contain further additives such as chain transfer agents, stabilisers, crystallising agents, plasticisers, dyestuffs, pigments or antioxidants, but not flameproofing agents.

9. A process for the preparation of polyamide moulding compositions according to at least one of claims 1 to 8, **characterised in that** polyamide prepolymers of defined viscosities in an amount of 0.1 to 20 wt.% of the polyamide matrix are admixed with the polyamide moulding compositions in the melt or by compounding.

10. A process according to claim 9, **characterised in that** the moulding compositions do not undergo a separate post-condensation step.

11. Use of the polyamide moulding compositions according to at least one of claims 1 to 8 for manufacturing mouldings such as fibres, films, pipes or hollow bodies.

12. Use according to claim 11 for manufacturing filled mouldings.

## Revendications

1. Matières à mouler en polyamide avec une bonne qualité de surface et un bon comportement à l'écoulement, consistant en un polyamide de poids moléculaire élevé, des polyamides prépolymères de viscosité en solution ηᵣₑₗ allant de 1,01-à 1,30, mesurée dans le m-crésol à 0,5% selon DIN 53 727, en des quantités allant de 0,1 à 20% en poids, 1-95% en poids de charges ainsi que d'autres aditifs, mais pas de modificateurs de résilience.

2. Matières à mouler en polyamide selon la revendication 1, **caractérisées en ce que** les polyamides prépolymères sont du même type que les matières à mouler en polyamide.

3. Matières à mouler en polyamide selon la revendication 1, **caractérisées en ce que** les polyamides prépolymères sont différents du type des matières à mouler en polyamide.

4. Matières à mouler en polyamide selon l'une quelconque des revendications 1 à 3, **caractérisées en ce que** les charges sont des fibres, billes, paillettes, poudres inorganiques, métalliques ou polymères ou leurs mélanges.

5. Matières à mouler en polyamide selon l'une quelconque des revendications 1 à 4,
**caractérisées en ce que** les polyamides prépolymères sont choisis parmi le PA 6, PA 66, PA 6I/6T, PA 6T/6I, PA 6T/66, PA 6/6T, PA 6T/6I/66, PA 6I/66, PA MACMT/6I ou leurs mélanges.

6. Matières à mouler en polyamide selon l'une quelconque des revendications 1 à 4, **caractérisées en ce que** les polyamides prépolymères sont choisis parmi le PA 12, PA 612, PA 912, PA 1012, PA 1212, PA 610, PA 12/6T, PA 8T, PA 9T, PA 12T, PA N12, PA NI/6T ou leurs mélanges.

7. Matières à mouler en polyamide selon l'une quelconque des revendications 1 à 4, **caractérisées en ce que** les polyamides prépolymères sont choisis parmi le PA MACM 1, le PA MACM 10, le PA MACM 12, le PA PACM 12, le PA PACP 12, le PA MXD6, le PA MXDI, le PA MACMT, le PA 12/MACMI, le PA 12/MACMT, le PA 12/MACMI, le PA NDT, la PA NDI, le PA IPDI/IPDT, le PA TMHMDA, T et le PA 12/PACM, T/PACM,I ou leurs mélanges.

8. Matières à mouler en polyamide selon l'une quelconque des revendications 1 à 7, **caractérisées en ce que** celles-ci contiennent comme autres additifs, des régulateurs de chaîne, des stabilisants, des agents de cristallisation, des plastifiants, des colorants, des pigments ou des antioxydants, mais pas d'agents ignifugeants.

9. Procédé de préparation des matières à mouler en polyamide selon l'une quelconque des revendications 1 à 8, **caractérisé en ce que** les matières à mouler en polyamide sont mélangées dans la masse fondue ou par compoundage avec des polyamides prépolymères de viscosité définie, de 0,1 à 20% en poids de la matrice polymère.

10. Procédé selon la revendication 9, **caractérisé en ce que** les matières à mouler ne sont pas soumises à une étape séparée de condensation ultérieure.

11. Utilisation des matières à mouler en polyamide selon au moins l'une quelconque des revendications 1 à 8, pour la préparation d'articles façonnés comme des fibres, feuilles, tubes ou corps creux.

12. Utilisation selon la revendication 11, pour la préparation d'articles moulés pleins.
